(19) Europäisches Patentamt
European Patent Office
Office européen des brevets

(11) Publication number: **0 135 370 B1**

# (12) EUROPEAN PATENT SPECIFICATION

(45) Date of publication of patent specification: 30.01.91

(51) Int. Cl.[5]: **G 11 B 7/24**

(21) Application number: 84305598.9

(22) Date of filing: 17.08.84

## (54) Information recording member.

(30) Priority: 19.08.83 JP 150148/83

(43) Date of publication of application: 27.03.85 Bulletin 85/13

(45) Publication of the grant of the patent: 30.01.91 Bulletin 91/05

(84) Designated Contracting States: DE FR GB NL

(56) References cited:
EP-A-0 045 183
EP-A-0 050 047
DE-A-2 739 610
DE-A-3 023 134
US-A-3 530 441

PATENT ABSTRACTS OF JAPAN, unexamined applications, Section P, Vol. 4, No. 58, April 30, 1980 THE PATENT OFFICE JAPANESE GOVERNMENT pages 96 P 9

The file contains technical information submitted after the application was filed and not included in this specification

(73) Proprietor: HITACHI, LTD.
6, Kanda Surugadai 4-chome
Chiyoda-ku, Tokyo 100 (JP)

(72) Inventor: Terao, Motoyasu
2196-383, Hirai Hinodemachi
Nishitama-gun Tokyo (JP)
Inventor: Miyauchi, Yasushi
1-47-1-D101, Akatsuki-cho
Hachioji-shi Tokyo (JP)
Inventor: Shigematsu, Kazuo
1-12, Ohaza-takahisa Yoshikawa-cho
Kita-katsushika-gun Saitama-ken (JP)
Inventor: Horigome, Shinkichi
7-52-13, Sunagawa-cho
Tachikawa-shi Tokyo (JP)

(74) Representative: Paget, Hugh Charles Edward et al
MEWBURN ELLIS & CO. 2/3 Cursitor Street
London EC4A 1BQ (GB)

EP 0 135 370 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to an information recording member for recording, on a real time basis, frequency-modulated analog signals such as video and audio signals or digital data such as computer data, facsimile signals, digital audio signals and the like. The information is recorded in the member on an information recording film formed on a substrate, using a recording beam such as laser light. The invention also extends to the method of recording information.

Among the various principles which exist for recording information on a film using laser light, the method based upon a change of atomic arrangement such as phase transition (or phase change) of the film material, photodarkening and the like, has the advantage that two discs can be directly bonded together to form a two-surface disc because deformation of the film hardly occurs. Moreover, rewriting of the information can be made possible by selection of a suitable composition. A large number of disclosures of recording members of this kind are known, and the earliest of all is U.S. Patent No. 3,530,441. This prior art reference discloses a large number of films such as the Te-Ge type, the As-Te-Ge type, the Te-O type, and so forth. Japanese Patent Laid-Open No. 28530/1980 discloses Te-O-Se and Te-O-S type films. However, it is extremely difficult to produce suitable films using these materials, and the stability of the amorphous state is not sufficiently high.

It is therefore an object of the present invention to provide an information recording member which can be produced by a process with high reproducibility and which can remain stable for an extended period of time.

In the information recording member of the invention, the information recording film has an average composition in the direction of film thickness expressed by:

$$M_xTe_ySe_zO_\alpha$$

where x, y, z and α are values within the ranges $2 \leqq x \leqq 40$, $30 \leq y \leq 95$, $3 \leq z \leq 45$ and $0 \leq \alpha \leq 20$, and M represents one of the following combinations of elements:

In and Sb
Sn and Ge
Pb and Sn
Sn and Bi
Sn and S
In and Pb
In and Bi
Sb and Bi
Sb and S
Sb and Pb
Sb and Sn
Sb and Ge
As and Sn
As and Sb

The combinations including Sn are preferred.

In its method aspect, the invention is set out in claim 11.

α may be zero, but preferably oxygen is present. In the manufacture of an information recording member of the present invention, the oxygen-containing film is preferably produced by first forming a film which does not contain oxygen having the formula $M_xTe_ySe_z$, and then heat-treating this film in air of high humidity or subjecting the film to ultraviolet radiation. In this case, the film is oxidized at least near its surface. Accordingly, the average composition of the film in the direction of its thickness is expressed by the general formula $M_xTe_ySe_zO\alpha$, where α is not zero but is not more than 20. If oxygen is introduced by such a method, the composition can be controlled more easily then by evaporation of oxide or by sputtering.

The distribution, in the direction of film thickness, of the contents of the elements M may be freely chosen, but it is preferred that this content increases at either one of the surface portions (which in some cases might be an interface with other layers) rather than in the interior of the film, because spontaneous crystallization from near the film surface, at which nuclei of micro-crystals are likely to develop, can thus be prevented. For the same reason, the distribution in the direction of film thickness of the Se content may be freely chosen, but preferably increases near the film surface (interface). Incidentally, the film may contain trace amounts of elements other than Te and Se and M.

The films, which contain relatively low amounts of oxygen, can be easily formed, have high crystallization temperatures and provide high stability.

Preferably, at least one of the surfaces of the recording film in a member of the present invention is protected by other material which is in close contact with that surface. The protective layer may consist of an acrylic resin sheet or a polycarbonate resin sheet which is the substrate, or at least one organic material such as an ultraviolet light cured resin, an epoxy resin, an acrylic resin, a polyester resin or the like. It may alternatively consist of at least one inorganic material such as an oxide, a sulfide, a fluoride, a carbide, a nitride or carbon. The substrate, if it consists of glass, quartz or sapphire can serve as an inorganic protective layer.

For heat resistance, the surface of the recording film is preferably in close contact with the inorganic material. However, if the thickness of the inorganic layer is increased, cracking and drop of transmissivity and sensitivity are likely to occur. It is therefore preferable that a thick organic layer is disposed in close contact with the inorganic layer on the opposite side thereof to the recording film. The organic layer may be the substrate, and in such a case, the risk of deformation of the recording film is reduced. Examples of the organic materials suitable for this purpose are polystyrene resins, acrylic resins, polycarbonate resins, epoxy resins, ethylene-vinyl acetate

copolymers known as hot melt adhesives, binders and the like. Ultraviolet light cured resins may alternatively be used.

The protective layer or layers consisting of inorganic materials can be formed in their proper compositions directly, can be formed more easily by first making a film made of at least one element of metals, semi-metals or semiconductors, and then making this film react with at least one of O, S and N. Examples of suitable inorganic protective layers include the following, and non-stoichiometric compounds having analogous compositions: $CeO_2$, $La_2O_3$, SiO, $SiO_2$, $In_2O_3$, $Al_2O_3$, GeO, $GeO_2$, PbO, SnO, $SnO_2$, $Bi_2O_3$, $TeO_2$, $WO_2$, $WO_3$, CdS, ZnS, CdSe, ZnSe, $In_2S_3$, $In_2Se_3$, $Sb_2S_3$, $Sb_2Se_3$, $Ga_2S_3$, $Ga_2Se_3$, $MgF_2$, $CeF_3$, $CaF_2$, GeS, GeSe, $GeSe_2$, SnS, SnSe, PbS, PbSe, $Bi_2Se_3$, $Bi_2S_3$, TaN and C. Among these, the compositions close to $GeO_2$ or $Al_2O_3$ are preferred because their vacuum evaporation is easy, surface reflectivity is not too high and the film is stable. Next preferred are compositions which are close to $SiO_2$.

When recording is effected by means of the phase transition, it is preferred that the entire surface of the recording film is crystallized in advance. When organic material is used for the substrate, however, the substrate cannot be heated to a high temperature, so that the film surface must be crystallized by other methods. In such a case, the combination of ultraviolet light radiation and heating, radiation of light from a flash lamp, or the like, is preferred. The recording film may be crystallized only on the recording track with the spacings between the tracks kept in amorphous state. It is of course possible to make recording on a recording film in the amorphous state by crystallization.

Generally, in the case of recording films which effect recording by means of a change of atomic arrangement such as phase transition, the read signal intensity or the degree of modulation can be improved if a light reflection (absorption) layer is disposed close to the recording film. If data rewriting is effected a large number of times or if recording is made using a beam having excessively high power, however, mutual diffusion and reaction may occur between the recording film and the light reflection layer. For this reason, it is preferred to dispose an intermediate layer consisting of at least one of a stable oxide, a sulfide, a fluoride and a nitride between the light reflection layer and the recording film. The melting point and boiling (sublimation) point of this layer are preferably higher than at least the melting point of the recording film. Where light absorption by the recording film is less, and the light reflection layer is chosen to absorb the light and the resulting heat is transmitted to the recording film so as to effect recording, the intermediate layer described above is preferably up to 100 nm (0.1 µm) thick, and particularly preferably from 1 nm to 50 nm thick, in order to achieve good heat transfer efficiency. The inorganic materials such as $GeO_2$, $Al_2O_3$ and the like that can be used as the protective layer can all be used as the intermediate layer.

The preferred ranges of thickness of the layers described above are tabulated below:

recording film: 3 nm to 300 nm
inorganic protective layer: 1 nm to 5 µm (0.1 to 20 mm when protection is given by the inorganic substrate itself)
organic protective layer: 10 nm to 10 mm
light reflection layer: 5 nm to 300 nm.

Each of the layers described above can be formed by selecting a suitable method of vacuum evaporation, evaporation inside gas, sputtering, ion beam evaporation, ion plating, electron beam evaporation, injection molding, casting, spin coating and plasma polymerization.

The recording member in accordance with the present invention can be not only in the disc form but also in the form of a tape or in other forms.

**Claims**

1. An information recording member having an information recording film which is formed on a substrate either directly or with the interposition of at least one inorganic or organic protective layer and which undergoes change of atomic arrangement upon being irradiated by a suitable recording beam, characterised in that said recording film has an average composition in the direction of a film thickness expressed by the formula:

$$M_xTe_ySe_zO_\alpha$$

where $2 \le x \le 40$, $30 \le y \le 95$, $3 \le z \le 45$ and $0 \le \alpha \le 20$, and M represents one of the following combinations of elements:

In and Sb
Sn and Ge
Pb and Sn
Sn and Bi
Sn and S
In and Pb
In and Bi
Sb and Bi
Sb and S
Sb and Pb
Sb and Sn
Sb and Ge
As and Sn
As and Sb

2. An information recording member as defined in Claim 2 wherein α is zero.

3. An information recording member as defined in Claim 1 wherein α is not zero and the oxygen in the recording film is introduced into the film by oxidisation of a film having an average configuration in its thickness direction expressed by the formula $M_xTe_ySe_z$ which has been formed previously.

4. An information recording member as defined in any one of Claims 1 to 3 wherein the concentration of Se and/or the elements expressed by M is greater at a portion adjacent at least one of the surfaces of the recording film than at the interior

portion thereof.

5. An information recording member as defined in any one of Claims 1 to 4 wherein there is a protective film adjacent at least one side of said recording film, the protective film having the composition $GeO_2$ or $Al_2O_3$ or close to $GeO_2$ or $Al_2O_3$.

6. An information recording member as defined in any one of Claims 1 to 5 wherein at least one protective layer consisting of inorganic materials is disposed on at least one side of said recording film adjacent to the surface of said recording film, and an organic layer is disposed on the side of the inorganic protective layer remote from the recording film.

7. An information recording member as defined in any one of Claims 1 to 6 wherein a light reflection and absorption layer is disposed at one side of the recording film with the interposition of an intermediate layer having a thickness in the range 1 nm to 50 nm.

8. An information recording member as defined in any one of Claims 1 to 7 wherein the distance, in the track direction between adjacent pairs of recording locations formed on the surface of said substrate and representing address locations is at least half of the length of the erasing light spot in that direction.

9. An information recording member as defined in any one of Claims 1 to 8 wherein the elements expressed by M include Sn.

10. An information recording member as defined in any one of Claims 1 to 9 wherein the recording film has a thickness in the range 3 to 300 nm.

11. A method of recording information comprising

(i) providing an information recording member having an information recording film which is formed on a substrate either directly or with the interposition of at least one inorganic or oragnic protective layer and which has an average composition in the direction of a film thickness expressed by the formula:

$$M_xTe_ySe_zO_\alpha$$

where $2 \leq x \leq 40$, $30 \leq y \leq 95$, $3 \leq z \leq 45$ and $0 \leq \alpha \leq 20$ and M represents one of the following combinations of elements:

In and Sb
Sn and Ge
Pb and Sn
Sn and Bi
Sn and S
In and Pb
In and Bi
Sb and Bi
Sb and S
Sb and Pb
Sb and Sn
Sb and Ge
As and Sn
As and Sb

(ii) irradiating said recording film with a recording beam so as selectively to cause a change of atomic arrangement of said film at locations thereof in accordance with the information being recorded, so as to record said information.

12. A method as defined in Claim 11 wherein α is zero.

13. A method as defined in Claim 11 wherein α is not zero and the oxygen in the recording film is introduced into the film by oxidisation of a film having an average configuration in its thickness direction expressed by the formula $M_xTe_ySe_z$ which has been formed previously.

14. A method as defined in any one of Claims 11 to 13 wherein the concentration of Se and/or the elements expressed by M is greater at a portion adjacent at least one of the surfaces of the recording film than at the interior portion thereof.

15. A method as defined in any one of Claims 11 to 14 wherein there is a protective film adjacent at least one side of said recording film, the protective film having the composition $GeO_2$ or $Al_2O_3$ or close to $GeO_2$ or $Al_2O_3$.

16. A method as defined in any one of Claims 11 to 15 wherein at least one protective layer consisting of inorganic materials is disposed on at least one side of said recording film adjacent to the surface of said recording film, and an organic layer is disposed on the side of the inorganic protective layer remote from the recording film.

17. A method as defined in any one of Claims 11 to 16 wherein a light reflection and absorption layer is disposed at one side of the recording film with the interposition of an intermediate layer having a thickness in the range 1 nm to 50 nm.

18. A method as defined in any one of Claims 11 to 17 wherein the distance, in the track direction between adjacent pairs of recording locations formed on the surface of said substrate and representing address locations is at least half of the length of the erasing light spot in that direction.

19. A method as defined in any one of Claims 11 to 18 wherein the elements expressed by M include Sn.

20. A method as defined in any one of Claims 11 to 19 comprising the further step of

(iii) detecting the changes of atomic arrangement at said locations in order to reproduce the information from the recording member.

21. A method according to any one of Claims 11 to 20 wherein the recording film has a thickness in the range 3 to 300 nm.

**Patentansprüche**

1. Informations-Aufzeichungselement mit einem auf einem Substrat entweder direkt oder unter Zwischenfügung mindestens einer anorganischen oder organischen Schutzschicht ausgebildeten Informations-Aufzeichnungsfilm, der bei Bestrahlung mit einem geeigneten Aufzeichnungsstrahl eine Änderung in der Atomanordnung durchläuft, dadurch gekennzeichnet, daß der Aufzeichnungsfilm in Richtung der Filmdicke

eine mittlere Zusammensetzung der folgenden Formel aufweist:

$$M_xTe_ySe_zO_\alpha$$

wobei $2 \leqq x \leqq 40$, $30 \leqq y \leqq 95$, $3 \leqq z \leqq 45$ und $0 \leqq \alpha \leqq 20$ ist und M eine der folgenden Kombinationen von Elementen angibt:

In und Sb
Sn und Ge
Pb und Sn
Sn und Bi
Sn und S
In und Pb
In und Bi
Sb und Bi
Sb und S
Sb und Pb
Sb und Sn
Sb und Ge
As und Sn
As und Sb

2. Informations-Aufzeichungselement nach Anspruch 1, wobei α null ist.

3. Informations-Aufzeichungselement nach Anspruch 1, wobei α nicht null ist und der in dem Aufzeichnungsfilm enthaltene Sauerstoff dadurch in diesen eingebracht wird, daß ein vorher ausgebildeter Film oxidiert wird, der in Richtung seiner Dicke eine mittlere Konfiguration der Formel $M_xTe_ySe_z$ aufweist.

4. Informations-Aufzeichungselement nach einem der Ansprüche 1 bis 3, wobei die Konzentration von Se und/oder den durch M ausgedrückten Elementen in einem Bereich nahe mindestens einer der Oberflächen des Aufzeichnungsfilms größer ist als in dessen innerem Bereich.

5. Informations-Aufzeichungselement nach einem der Ansprüche 1 bis 4, wobei an mindestens einer Seite des Aufzeichnungsfilms ein Schutzfilm vorhanden ist, der die Zusammensetzung $GeO_2$ oder $Al_2O_3$ oder nahezu $GeO_2$ oder $Al_2O_3$ aufweist.

6. Informations-Aufzeichungselement nach einem der Ansprüche 1 bis 5, wobei an mindestens einer der Oberfläche des Aufzeichnungsfilms benachbarten Seite dieses Films mindestens eine aus anorganischen Materialien bestehende Schutzschicht und an der von dem Aufzeichnungsfilm abgewandten Seite der anorganischen Schutzschicht eine organische Schicht angeordnet ist.

7. Informations-Aufzeichungselement nach einem der Ansprüche 1 bis 6, wobei an einer Seite des Aufzeichnungsfilms unter Zwischenfügung einer Zwischenschicht mit einer Dicke im Bereich von 1 nm bis 50 nm eine Lichtreflexions- und -absorptionsschicht angeordnet ist.

8. Informations-Aufzeichungselement nach einem der Ansprüche 1 bis 7, wobei der Abstand in Spurrichtung zwischen benachbarten Paaren von Aufzeichnungsstellen, die auf der Oberfläche des Substrats ausgebildet sind und Adressenplätze darstellen, mindestens die Hälfte der Länge des Lösch-Lichtflecks in dieser Richtung beträgt.

9. Informations-Aufzeichnungselement nach einem der Ansprüche 1 bis 8, wobei die durch M ausgedrückten Elemente Sn enthalten.

10. Informations-Aufzeichnungselement nach einem der Ansprüche 1 bis 9, wobei der Aufzeichnungsfilm eine Dicke im Bereich von 3 bis 300 nm aufweist.

11. Informations-Aufzeichnungsverfahren, umfassend

(i) Vorbereiten eines Informations-Aufzeichnungselements mit einem auf einem Substrat entweder direkt oder unter Zwischenfügung mindestens einer anorganischen oder organischen Schutzschicht ausgebildeten Informations-Aufzeichnungsfilm, der in Richtung der Filmdicke eine mittlere Zusammensetzung der folgenden Formel aufweist:

$$M_xTe_ySe_zO_\alpha$$

wobei $2 \leqq x \leqq 40$, $30 \leqq y \leqq 95$, $3 \leqq z \leqq 45$ und $0 \leqq \alpha \leqq 20$ ist und M eine der folgenden Kombinationen von Elementen angibt:

In und Sb
Sn und Ge
Pb und Sn
Sn und Bi
Sn und S
In und Pb
In und Bi
Sb und Bi
Sb und S
Sb und Pb
Sb und Sn
Sb und Ge
As und Sn
As und Sb

(ii) Bestrahlen des Aufzeichnungsfilms mit einem Aufzeichnungsstrahl, um in dem Film an Stellen entsprechend der aufzuzeichnenden Information selektiv eine Änderung der Atomanordnung hervorzurufen, um die Information aufzuzeichnen.

12. Verfahren nach Anspruch 11, wobei α null ist.

13. Verfahren nach Anspruch 11, wobei α nicht null ist und der in dem Aufzeichnungsfilm enthaltene Sauerstoff in diesen dadurch eingebracht wird, daß ein vorher ausgebildeter Film oxidiert wird, der in Richtung seiner Dicke eine mittlere Konfiguration der Formel $M_xTe_ySe_z$ aufweist.

14. Verfahren nach einem der Ansprüche 11 bis 13, wobei die Konzentration von Se und/oder den durch M ausgedrückten Elementen in einem Bereich nahe mindestens einer der Oberflächen des Aufzeichnungsfilms größer ist als in dessen innerem Bereich.

15. Verfahren nach einem der Ansprüche 11 bis 14, wobei an mindestens einer Seite des Aufzeichnungsfilms ein Schutzfilm vorhanden ist, der die Zusammensetzung $GeO_2$ oder $Al_2O_3$ oder nahezu $GeO_2$ oder $Al_2O_3$ aufweist.

16. Verfahren nach einem der Ansprüche 11 bis 15, wobei an mindestens einer der Oberfläche des

Aufzeichnungsfilms benachbarten Seite dieses Films mindestens eine aus anorganischen Materialien bestehende Schutzschicht und an der von dem Aufzeichnungsfilm abgewandten Seite der anorganischen Schutzschicht eine organische Schicht angeordnet ist.

17. Verfahren nach einem der Ansprüche 11 bis 16, wobei an einer Seite des Aufzeichnungsfilms unter Zwischenfügung einer Zwischenschicht mit einer Dicke im Bereich von 1 nm bis 50 nm eine Lichtreflexions- und -absorptionsschicht angeordnet ist.

18. Verfahren nach einem der Ansprüche 11 bis 17, wobei der Abstand in Spurrichtung zwischen benachbarten Paaren von Aufzeichnungsstellen, die auf der Oberfläche des Substrats ausgebildet sind und Adressenplätze darstellen, mindestens die Hälfte der Länge des Lösch-Lichtflecks in dieser Richtung beträgt.

19. Verfahren nach einem der Ansprüche 11 bis 18, wobei die durch M ausgedrückten Elemente Sn enthalten.

20. Verfahren nach einem der Ansprüche 11 bis 19, umfassend den weiteren Schritt:

(iii) Erfassen von Änderungen der Atomanordnung an den besagten Stellen zum Reproduzieren der Information von dem Aufzeichnungselement.

21. Verfahren nach einem der Ansprüche 11 bis 20, wobei der Aufzeichnungsfilm eine Dicke im Bereich von 3 bis 300 nm aufweist.

**Revendications**

1. Elément d'enregistrement de l'information comportant une pellicule d'enregistrement de l'information qui est formée sur un substrat, soit directement, soit avec interposition d'au moins une couche protectrice inorganique ou organique et qui subit une modification de disposition atomique lorsqu'elle est irradiée par un fasiceau d'enregistrement approprié, caractérisé en ce que ladite pellicule d'enregistrement a une composition moyenne dans la direction de l'épaisseur de la pellicule exprimée par la formule:

$$M_xTe_ySe_zO_\alpha$$

où $2 \leq x \leq 40$, $30 \leq y \leq 95$, $3 \leq z \leq 45$ et $0 \leq \alpha \leq 20$, et M représente l'une des combinaisons d'éléments suivantes:

In et Sb
Sn et Ge
Pb et Sn
Sn et Bi
Sn et S
In et Pb
In et Bi
Sb et Bi
Sb et S
Sb et Pb
Sb et Sn
Sb et Ge
As et Sn
As et Sb

2. Elément d'enregistrement de l'information tel que défini dans la revendication 1 dans lequel α vaut zéro.

3. Elément d'enregistrement de l'information tel que défini dans la revendication 1 dans lequel α est différent de zéro et l'oxygène dans la pellicule d'enregistrement est introduit dans la pellicule par oxydation d'une pellicule ayant une configuration moyenne dans la direction de son épaisseur exprimée par la formule $M_xTe_ySe_z$ qui a été formée auparavant.

4. Elément d'enregistrement de l'information tel que défini dans l'une quelconque des revendications 1 à 3 dans lequel la concentration de Se et/ou des éléments exprimés par M est supérieure à une partie adjacente à au moins une des surfaces de la pellicule d'enregistrement à ce qu'elle est dans sa partie intérieure.

5. Elément d'enregistrement de l'information tel que défini dans l'une quelconque des revendications 1 à 4 dans lequel se trouve une pellicule protectrice adjacente à au moins un côté de ladite pellicule d'enregistrement, la pellicule protectrice ayant la composition $GeO_2$ ou $Al_2O_3$ ou voisine de $GeO_2$ ou $Al_2O_3$.

6. Elément d'enregistrement de l'information tel que défini dans l'une quelconque des revendications 1 à 5 dans lequel au moins une couche protectrice constituée de matières inorganiques est disposée sur au moins un côté de ladite pellicule d'enregistrement de manière adjacente à la surface de ladite pellicule d'enregistrement, et une couche organique est disposée sur le côté de la couche protectrice inorganique à une distance éloignée de la pellicule d'enregistrement.

7. Elément d'enregistrement de l'information tel que défini dans l'une quelconque des revendications 1 à 6 dans lequel une couche de réflexion et d'absorption de la lumière est disposée sur un côté de la pellicule d'enregistrement avec interposition d'une couche intermédiaire ayant une épaisseur comprise dans un intervalle de 1 nm à 50 nm.

8. Elément d'enregistrement de l'information tel que défini dans l'une quelconque des revendications 1 à 7 dans lequel la distance, dans la direction de la piste entre des paires adjacentes d'endroits d'enregistrement formés à la surface dudit substrat et représentant des lieux d'adresse, est d'au moins la moitié de la longueur du point lumineux d'effacement dans cette direction.

9. Elément d'enregistrement de l'information tel que défini dans l'une quelconque des revendications 1 à 8 dans lequel les éléments exprimés par M incluent Sn.

10. Elément d'enregistrement de l'information tel que défini dans l'une quelconque des revendications 1 à 9 dans lequel la pellicule d'enregistrement a une épaisseur comprise dans un intervalle de 3 à 300 nm.

11. Procédé d'enregistrement de l'information dans lequel

(i) on fournit un élément d'enregistrement de l'information ayant une pellicule d'enregistrement de l'information qui est formée sur un

substrat soit directement, soit avec interposition d'au moins une couche protectrice inorganique ou organique et qui a une composition moyenne dans la direction de l'épaisseur de la pellicule exprimée par la formule:

$$M_xTe_ySe_zO_\alpha$$

où $2 \leqslant x \leqslant 40$, $30 \leqslant y \leqslant 95$, $3 \leqslant z \leqslant 45$ et $0 \leqslant \alpha \leqslant 20$ et M représente l'une des combinaisons d'éléments suivantes:

In et Sb
Sn et Ge
Pb et Sn
Sn et Bi
Sn et S
In et Pb
In et Bi
Sb et Bi
Sb et S
Sb et Pb
Sb et Sn
Sb et Ge
As et Sn
As et Sb

(ii) on irradie ladite pellicule d'enregistrement avec un faisceau d'enregistrement de manière à provoquer sélectivement une modification de la disposition de ladite pellicule en des endroits de celle-ci selon l'information enregistrée, de manière à enregistrer ladite information.

12. Procédé tel que défini dans la revendication 11 dans lequel α vaut zéro.

13. Procédé tel que défini dans la revendication 11 dans lequel α ne vaut pas zéro et l'oxygène dans la pellicule d'enregistrement est introduit dans la pellicule par oxydation d'une pellicule ayant une configuration moyenne dans le sens de son épaisseur exprimée par la formule $M_xTe_ySe_z$ qui a été formée auparavant.

14. Procédé tel que défini dans l'une quelconque des revendications 11 à 13 dans lequel la concentration de Se et/ou des éléments exprimés par M est supérieure en une partie adjacente à au moins une des surfaces de la pellicule d'enregistrement à ce qu'elle est dans sa partie intérieure.

15. Procédé tel que défini dans l'une quelconque des revendications 11 à 14 dans lequel se trouve une pellicule protectrice adjacente à au moins un côté de ladite pellicule d'enregistrement, la pellicule protectrice ayant la composition $GeO_2$ ou $Al_2O_3$ ou proche de $GeO_2$ ou $Al_2O_3$.

16. Procédé tel que défini dans l'une quelconque des revendications 11 à 15 dans lequel au moins une couche protectrice constituée de matières inorganiques est disposée sur au moins un côté de ladite pellicule d'enregistrement de manière adjacente à la surface de ladite pellicule d'enregistrement, et une couche organique est disposée sur le côté de la couche protectrice inorganique éloigné de la pellicule d'enregistrement.

17. Procédé tel que défini dans l'une quelconque des revendications 11 à 16 dans lequel une couche de réflexion et d'absorption de la lumière est disposée sur un côté de la pellicule d'enregistrement avec interposition d'une couche intermédiaire ayant une épaisseur comprise dans un intervalle de 1 nm à 50 nm.

18. Procédé tel que défini dans l'une quelconque des revendications 11 à 17 dans lequel la distance, dans la direction de la piste entre des paires adjacentes d'endroits d'enregistrement formés à la surface dudit substrat et représentant des lieux d'adresse, est d'au moins la moitié de la longueur du point lumineux d'effacement dans cette direction.

19. Procédé tel que défini dans l'une quelconque des revendications 11 à 18 dans lequel les éléments exprimés par M incluent Sn.

20. Procédé tel que défini dans l'une quelconque des revendications 11 à 19 comprenant l'étape supplémentaire de

(iii) détection des modifications de disposition atomique auxdits endroits afin de reproduire l'information à partir de l'élément d'enregistrement.

21. Procédé selon l'une quelconque des revendications 11 à 20 dans lequel la pellicule d'enregistrement a une épaisseur comprise dans un intervalle de 3 à 300 nm.